# FASCICULE DE BREVET EUROPEEN

(11) **EP 3 863 911 B1**
(45) Date de publication et mention de la délivrance du brevet: **21.12.2022**
(21) Numéro de dépôt: 19779498.5
(22) Date de dépôt: 03.10.2019
(51) Int. Cl.: B62D 25/02, B62D 25/08, B62D 25/16, B60R 11/02

(54) **AGENCEMENT D'UNE CAISSE DE VÉHICULE AUTOMOBILE COMPORTANT UN MODULE DE HAUT-PARLEUR**
FAHRZEUGKAROSSERIEANORDNUNG MIT EINEM LAUTSPRECHERMODUL
VEHICLE BODY ARRANGEMENT COMPRISING A LOUDSPEAKER MODULE

(30) Priorité: 09.10.2018 FR 1871153
(43) Date de publication de la demande: 18.08.2021
(73) Titulaire: Renault s.a.s, 92100 Boulogne Billancourt (FR)
(72) Inventeur: CONDE IGLESIAS, Manuel, 78140 VELIZY-VILLACOUBLAY (FR); OLLOIX, Clement, 92240 MALAKOFF (FR)
(74) Mandataire: Renault Group
(86) Numéro de dépôt international: PCT/EP2019/076824
(87) Numéro de publication internationale: WO 2020/074363

(56) Documents cités:
- EP-A1- 2 858 377
- EP-A2- 1 241 079
- DE-U1-202018 101 901
- JP-A- 2006 213 151
- JP-A- 2017 178 178

## Description

La présente invention est du domaine des véhicules dont la caisse est conformée de manière à intégrer un module de haut-parleur.

L'invention porte plus particulièrement sur un agencement d'une caisse de véhicule comportant au moins un passage de roue, notamment un passage de roue arrière, réalisé par l'assemblage d'au moins une doublure latérale de caisse avec une pièce interne, la doublure latérale de caisse étant notamment une doublure de custode arrière délimitant une partie externe du passage de roue, notamment un demi-passage externe de roue, la pièce interne étant une pièce de liaison de la doublure latérale à un plancher, notamment un plancher de coffre, la pièce interne délimitant une partie intérieure du passage de roue, notamment un demi-passage interne de roue.

Un véhicule automobile est généralement équipé d'un module de haut-parleur, par exemple un caisson de basses. Un tel caisson de basses est implanté en général au sein du plancher du véhicule automobile, par exemple au sein du plancher arrière. Seulement l'évolution de la réglementation en termes de dépollution des moteurs à combustion interne engendre des systèmes de traitement des polluants complexes et encombrants. Le volume disponible au sein du plancher arrière est alors insuffisant pour recevoir un module de haut-parleur.

Un véhicule automobile est en outre généralement réalisé avec une caisse dont la structure est réalisée par un assemblage de pièces de tôlerie de différentes épaisseurs de sorte que le déplacement du module de haut-parleur vers une partie de la caisse autre que le plancher engendre de nouvelles difficultés d'intégration. A titre d'exemple, nous avons relevé comme problématique d'intégration la conformation particulière et complexe des pièces de la caisse répondant aux contraintes de style des véhicules, les normes métier d'emboutissage qui contraint la géométrie des pièces embouties de tôlerie afin d'éviter tout déchirement de matière, mais aussi la tenue à la déformation des zones de fixation du module de haut-parleur lorsque celles-ci sont réalisées dans des tôles d'épaisseur insuffisante.

Le document JP 2006 213151 A décrit un agencement d'une caisse de véhicule selon le préambule de la revendication 1.

Le but de l'invention est de permettre l'implantation d'un module de haut-parleur remédiant aux inconvénients ci-dessus. En particulier, l'invention propose une caisse de véhicule automobile supportant un module de haut-parleur de manière simple et fiable, et étant peu onéreuse à produire.

A cet effet, l'invention a pour objet un agencement d'une caisse de véhicule, du type précité, comprenant les caractéristiques techniques décrites dans la partie caractérisante de la revendication 1.

Selon l'invention, la pièce interne comprend une ouverture traversant une portion supérieure de la pièce interne s'étendant sensiblement en saillie verticale hors d'une portion galbée. L'ouverture est destinée à créer une voie de communication entre un corps creux de la caisse communiquant vers l'extérieur du véhicule et un module de haut-parleur, la portion supérieure de la pièce interne étant transversalement espacée de la doublure latérale et d'un côté de caisse de sorte que l'ensemble ainsi formé par la pièce interne avec la doublure latérale et/ou un côté de caisse délimite le corps creux ayant des propriétés acoustiques sensiblement équivalentes à celles d'un caisson de basses.

Un tel agencement permet l'intégration d'un module de haut-parleur ayant une ouverture d'aération qui soit du type d'une ouverture axiale d'axe approximativement parallèle à celui du haut-parleur.

L'agencement peut en outre comprendre les caractéristiques suivantes, prises séparément ou en combinaison entre elles :
- la pièce interne comprend une paroi supérieure, notamment une paroi approximativement plane s'étendant dans un plan d'axe vertical, prolongeant une paroi incurvée autour des axes longitudinal et transversal, la paroi incurvée délimitant le bord intérieur du passage de roue,

- l'ouverture de la pièce interne est en forme de trou oblong d'axe approximativement longitudinal réalisé au niveau de la paroi supérieure,
- l'agencement comprend un module de haut-parleur comportant un boîtier du haut-parleur, le boîtier comportant une cloison perforée s'étendant à l'arrière du module de haut-parleur,
- le boîtier du module de haut-parleur comprend ledit moyen d'étanchéité,
- le moyen d'étanchéité comprend au moins un joint d'étanchéité à cellules fermées,
- le boîtier comprend une portion arrière s'étendant directement au regard du haut-parleur, la portion arrière comportant l'ouverture,
- le boîtier comprend une portion déportée s'étendant sensiblement en saillie radiale du haut-parleur, la portion déportée comportant l'ouverture,
- des moyens de support du module de haut-parleur à la caisse sont directement fixés au boîtier du module de haut-parleur et/ou à la doublure latérale et/ou à la pièce interne et/ou à un moyen de renfort,
- les moyens de support du module de haut-parleur sont fixés à la caisse par vissage ou soudage,
- l'agencement comprend un moyen de renfort disposé sur la doublure latérale et/ou la pièce interne,
- le moyen de renfort est assujetti à la partie de la doublure latérale ou à la partie de la pièce interne contre laquelle il est disposé en appui,
- le moyen de support est un pontet de liaison fixé par vissage au moyen de renfort par au moins une vis traversant la doublure latérale,
- le moyen de renfort est réalisé à partir d'une plaque d'acier d'épaisseur supérieure à celle de la doublure latérale et/ou de la pièce interne,
- une autre ouverture apte à assurer l'évacuation de la condensation du module de haut-parleur est ménagée sur la caisse, notamment au niveau de la pièce interne ou au niveau d'une pièce de fermeture reliant la pièce interne à la doublure latérale et au plancher,
- un tuyau relie le module de haut-parleur à l'autre ouverture,
- l'autre ouverture est positionnée au niveau de la portion galbée du demi-passage interne de roue.

L'invention porte aussi sur un véhicule, notamment une automobile, caractérisé en ce qu'il comprend un agencement ayant l'une quelconque des caractéristiques précédentes.

Ces objets, caractéristiques et avantages de la présente invention seront exposés en détail dans la description suivante d'un mode de réalisation faite à titre non-limitatif en relation avec les figures jointes.
[Fig. 1] représente de manière schématique, selon une vue de l'intérieur, l'agencement d'une caisse intégrant un module de haut-parleur sur un côté latérale de caisse comportant un passage de roue arrière, conformément à l'invention.
[Fig. 2] représente de manière schématique une pièce interne qui forme un demi-passage interne de roue et présente à cet effet un galbe particulier.
[Fig. 3] représente en perspective, selon une coupe d'axe III-III de la figure 1, l'extérieur de l'agencement selon l'invention.
[Fig. 4] représente une coupe d'axe IV-IV de la figure 1, l'agencement selon l'invention.
[Fig. 5] représente de manière schématique, une variante de réalisation de l'agencement de l'invention, selon une vue de l'intérieur.
[Fig. 6] représente de manière schématique l'agencement de la figure 5 vue de l'extérieur d'une doublure latérale de caisse.
[Fig. 7] représente en perspective des moyens de support et des moyens de renfort de la variante de réalisation représentée sur les figures 5 et 6. Bien que la description suivante se rapporte au passage de roue arrière droit, la solution pourrait être adoptée pour un passage de roue arrière gauche.

La direction selon laquelle le véhicule se déplace en ligne droite est définie comme étant la direction longitudinale X. Par convention, la direction perpendiculaire à la direction longitudinale X, située dans un plan parallèle au sol, est nommée direction transversale Y. La troisième direction, perpendiculaire aux deux autres, est nommée direction verticale Z.

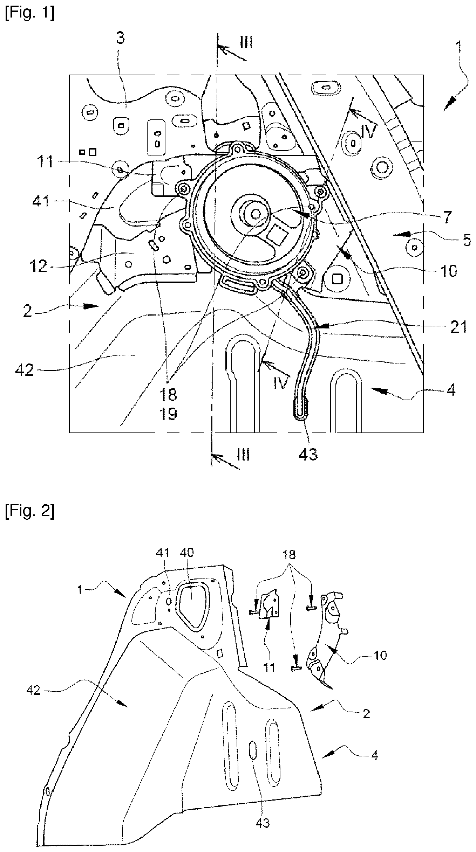

La figure 1 représente l'agencement d'un module de haut-parleur 7 sur une caisse 1 de véhicule automobile, plus particulièrement sur le passage 2 de roue arrière. Le passage 2 de roue est constitué ici d'une demi-passage externe assemblé à un demi-passage interne réalisés respectivement dans une doublure latérale 3 et par une pièce interne 4. La doublure latérale 3 est notamment une doublure de custode, tandis que la pièce interne 4 est une pièce de liaison de la doublure de custode au plancher du véhicule. La doublure latérale 3 présente une portion sensiblement verticale qui se prolonge vers le bas par une portion galbée vers l'extérieur dans laquelle la roue peut évoluer. La pièce interne 4 présente une portion haute 41 qui est sensiblement verticale et qui est prolongée vers le bas par une portion galbée 42 vers l'intérieur dans laquelle la roue peut évoluer. La doublure latérale 3 et la pièce interne 4 sont superposées l'une sur l'autre de telle sorte qu'elles peuvent être assemblées par soudure de leurs portions verticales en appui. L'assemblage de la doublure latérale 3 à la pièce interne 4 délimite le passage 2 de roue.

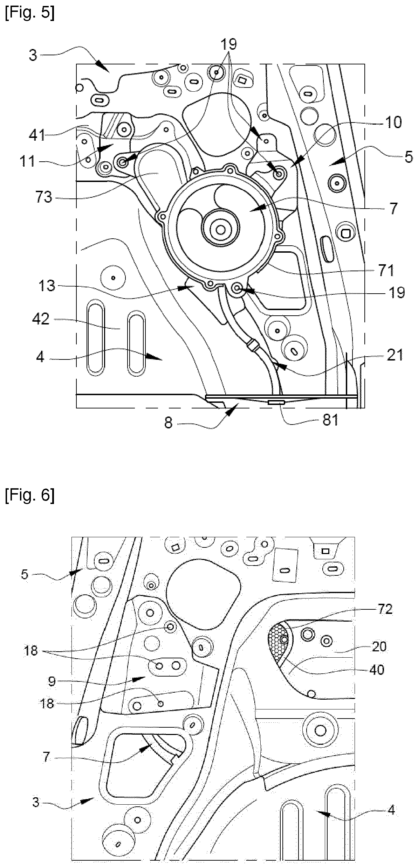

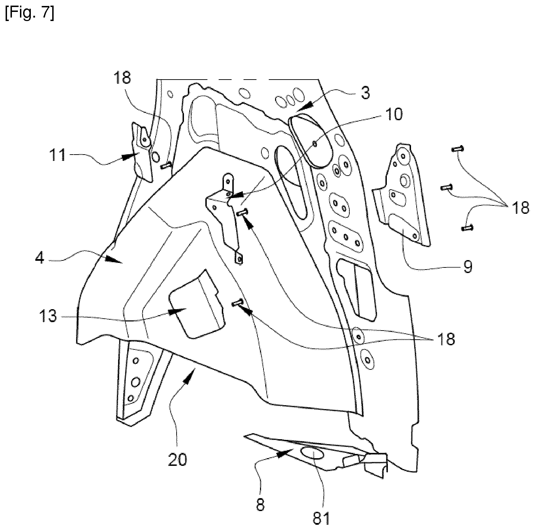

L'agencement de l'invention comprend un module 7 de haut-parleur qui, par rapport à la portion galbée 42, est positionné dans un logement délimité par la portion galbée 42, la portion verticale 41 et un renfort arrière 5 de custode. Un tel logement permet de disposer le module 7 de haut-parleur au-dessus de la portion galbée 42 de la pièce interne 4 dans une alcôve de la caisse de telle sorte que le module 7 de haut-parleur est disposé au-dessus de la portion galbée 42 et transversalement en retrait. La zone de la caisse dans laquelle évolue le module 7 de haut-parleur est située dans la partie latérale arrière qui délimite le coffre du véhicule. La caisse 1 comprend des parties latérales arrière gauche et arrière droite qui sont reliées l'une avec l'autre directement au moyen du plancher de coffre ou indirectement par l'intermédiaire d'une pièce de fermeture 8, rendue visible aux figures 5 et 7, dont les bords pliés viennent en contact avec la partie latérale constituée de la pièce interne 4 et de la doublure latérale 3. Le module 7 de haut-parleur est monté de manière réversible sur la caisse par l'intermédiaire d'un moyen de fixation de type à vis 18 et écrous 19. Compte tenu de la masse du module 7 de haut-parleur, sa fixation par vissage directement sur la caisse nécessite l'ajout de moyen de support 10, 11 qui permette d'adapter la position du module 7 de haut-parleur indépendamment de la forme de la caisse. Cela permet d'agencer le module 7 de haut-parleur selon une position prédéterminée pour obtenir un effet sonore particulier.

Les moyens de support 10, 11 sont réalisées à partir d'une tôle emboutie de manière à créer des interfaces entre d'un côté la pièce interne 4 et de l'autre un boîtier 71 de module 7 de haut-parleur. Afin de créer une résistance à la déformation, lesdits moyens de support 10, 11 comprennent des zones nervurées qui sont chacune destinées à former directement une interface de fixation du module 7 de haut-parleur. L'agencement de caisse comprend également un moyen de renfort 12 rapporté contre la face intérieure de la portion haute 41 de la pièce interne 4. Le moyen de renfort 12 est une pièce rapportée à superposition et soudée à la pièce interne 4 afin de créer de manière locale une rigidité augmentée de la portion haute 41. Cela vise notamment à compenser l'affaiblissement de la partie haute 41 qui vient de la découpe faite pour créer une ouverture 40 d'aération du module 7 de haut-parleur, traversant de part en part la pièce interne 4. L'ouverture 40 est rendue visible sur la figure 2. Elle a pour but de créer un passage vers un corps creux de la caisse 1 en relation avec l'extérieur de la caisse, le corps creux étant formé par l'assemblage de la pièce interne 4 et de la doublure latérale 3. Un tel corps creux permet à la caisse 1 du véhicule de réaliser un caisson 20 de basses en communication avec le module 7 de haut-parleur, la caisse jouant ainsi un rôle important dans le rendu acoustique donné par le module 7 de haut-parleur.

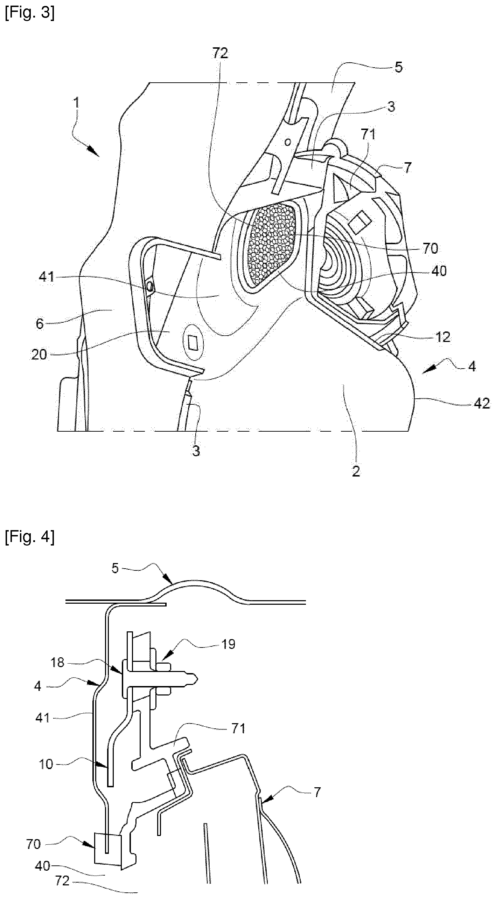

La figure 3 représente le positionnement du module 7 de haut-parleur dont le boîtier 71 comprend une cloison perforée 72 disposée au regard de l'ouverture 40. Du fait de cette conception, le module 7 de haut-parleur peut aussi être qualifié de module 7 de haut-parleur axial.

Le passage 2 de roue est ici représenté selon une disposition en-dessous du caisson 20 de basses, ce dernier étant réalisé par le caisse 1, notamment par la pièce interne 4, la doublure latérale 3 et la pièce de carrosserie formant le côté de caisse 6 visible de l'extérieur du véhicule.

Comme cela est représenté sur les figures 3 et 4, un moyen d'étanchéité 70 est monté sur la portion haute 41 de la pièce interne 4 afin de rendre étanche à l'air la liaison entre le boîtier 71 et l'ouverture 40 de la pièce interne 4. Ce moyen d'étanchéité 70 est de préférence une mousse à cellules fermées qui est collée directement sur la face externe du boîtier 71 et qui est rapporté contre le bord périphérique de l'ouverture 40, notamment la totalité du bord périphérique de l'ouverture 40. Une telle étanchéité à l'air permet de guider le volume d'air contenu à l'intérieur du module 7 de haut-parleur dans le caisson 20 formé directement par la caisse 1, le caisson 20 étant alors assimilable à une tuyère d'enceinte acoustique.

La figure 4 représente en coupe le module 7 de haut-parleur, son support 71 assemblé par vissage sur le support 10. Le logement de réception du module 7 de haut-parleur est ici représenté par le renfort 5 de doublure de custode s'étendant transversalement à la caisse, perpendiculairement à la portion haute 41 de la pièce de renfort. L'ouverture 40 est disposée de manière coaxiale à la cloison perforée 72 du boîtier 71 de telle sorte qu'un joint d'étanchéité préalablement collé sur le boîtier 71 est interposé entre le module 7 de haut-parleur et la caisse 1. Du fait d'une conception en mousse à cellules fermées, la jonction entre l'ouverture 40 et la cloison perforée 72 est rendue étanche à l'air sous l'effet d'une compression de la mousse.

Une variante de réalisation du module 7 de haut-parleur est représentée sur les figures 5 et 6. La particularité de ce mode de réalisation réside dans le positionnement de la paroi perforée 72 qui, contrairement à une disposition directement au regard du haut-parleur telle qu'illustrée en figure 3, se trouve être positionnée au niveau d'une portion déportée 73 s'étendant sensiblement en saillie radiale du haut-parleur. La portion déportée 73 est une extension du boîtier 71, qui permet d'assurer pour partie la fixation du module 7 de haut-parleur sur la caisse 1.

Un moyen de renfort 9 est ici utilisé pour rigidifier la doublure latérale 3. Ledit moyen de renfort 9 est une plaque de tôle emboutie qui est rapporté à superposition de la face externe de la doublure latérale 3 sensiblement au droit du moyen de support 10. Les moyens de fixation comprenant des vis 18 de serrage sont préalablement solidarisé au renfort 9. La doublure latérale 3 comprend des ouvertures au travers desquelles s'étendent respectivement chacune des vis 18 de serrage. Le renfort 9 est assemblé par soudage à la doublure latérale 3 afin de rigidifier localement cette dernière, notamment dans une zone bordée d'au moins une ouverture d'allégement, par exemple une zone bordée de deux ouvertures d'allégement comme cela est rendu visible sur la figure 6.

Le recours à un module 7 de haut-parleur équipé d'une portion déportée 73 permet d'augmenter la liberté d'implantation du haut-parleur puisque seule la portion déportée doit être disposé au regard d'une ouverture 40 de communication avec un caisson 20 de basses réalisé par la caisse 1.

Le moyen de support comprend un premier support 10 positionné directement sur la face intérieure de la doublure latérale 3.

Le moyen de support comprend un second support 10 positionné directement sur la face intérieure de la portion haute 41 de la pièce interne 4, tandis qu'un troisième support 13 est directement positionné sur un bord sensiblement vertical prolongeant la portion galbée 42.

Le premier support 10 est un pontet de liaison comportant des trous au travers desquels les vis 18 sont disposées afin d'assurer un montage par serrage du module 7 sur la doublure latérale 3, via une patte située en partie supérieure latérale droite du boîtier 71. Le second support 11 est un pontet de liaison rapporté soudé à la pièce interne 4 et comportant une vis pour le serrage de la portion déportée 73 par un écrou 19, la portion déportée 73 étant ici située en partie supérieure latérale gauche du boîtier 71. Le troisième support 13 est un pontet de liaison rapporté soudé à la pièce interne 4 et comportant une vis pour le serrage de la partie inférieure du module 7 de haut-parleur par un écrou 19.Les moyens de support 10, 11, 13 permettent d'assurer un positionnement prédéterminé du module 7 de haut-parleur indépendamment de la géométrie de la caisse 1.

Les figures 5 et 7 représentent un agencement de caisse 1 comprenant une pièce de fermeture 8 qui joint la pièce interne 4 ainsi que la doublure latérale 3 au plancher (non représenté). Il s'agit ici d'une pièce de tôlerie de profil approximativement horizontal comportant un bord relevé, notamment issu de pliage, disposé en appui contre la face intérieure de la pièce interne 4 et de la doublure latérale 3. Le recours à une telle pièce rapportée est pour partie dicté par des règles de conception et d'emboutissage mais aussi par des problématiques de coût qui, si cette pièce de fermeture était venue directement de matière de la pièce interne 4, aurait augmenté le coût de fabrication de la caisse, notamment du fait des rebuts de matière.

Quel que soit le mode de réalisation, l'agencement de la caisse 1 comprend une autre ouverture 43, 81 assurant une voie de communication entre le passage 2 de roue et le coffre. L'autre ouverture 43, 81 permet d'assurer le montage d'un tuyau 21 d'évacuation de la condensation contenue dans le module 7 de haut-parleur. A cet effet, le tuyau 21 est relié par sa partie supérieure à une partie inférieure du boîtier 71 du module 7 de haut-parleur tandis que l'extrémité opposée du tuyau 21 est emmanché dans ladite autre ouverture 43, 81.

En figures 1 et 2, l'autre ouverture 43 est positionnée sur la portion galbée de la pièce interne 4 de telle sorte que l'eau de condensation peut s'écouler vers le passage 2 de roue.

En figure 5, l'autre ouverture 43 est positionnée directement sur la pièce de fermeture 8 de telle sorte que l'eau de condensation peut s'écouler vers le dessous du plancher de coffre.

Afin d'éviter la projection d'eau et de poussière dans le caisson 20 définit par la caisse 1, le passage 2 de roue comprend un écran intérieur (non représenté).

La caisse 1 permet ainsi l'exploitation de l'espace fermé par une garniture latérale du coffre, plus précisément, entre la garniture de coffre et le côté de caisse comportant le passage de roue interne. Il en résulte un gain de place au niveau du plancher lorsque le module 7 de haut-parleur est positionné dans cet espace. Ainsi, la caisse 1 comprend un plancher arrière doté d'un volume désormais disponible pour loger notamment d'autres équipements du véhicule, par exemple un recevoir d'un dispositif de dépollution, tel un réservoir d'urée.

En outre, la solution précédemment décrite permet d'intégrer discrètement le module de haut-parleur dans le coffre arrière puisqu'il est de préférence caché par la garniture latérale du coffre. Le module de haut-parleur n'est alors pas visible, même après ouverture de la porte de coffre.

De plus, la solution permet avantageusement de s'affranchir d'un caisson de basses dédié puisque ce dernier est directement conçu par la caisse du véhicule, ce qui permet en outre un allègement de poids et un cout de fabrication réduit.

En remarque, l'agencement de caisse de l'invention atteint donc l'objet recherché d'optimisation de l'encombrement au sein du plancher arrière et présente les avantages suivants :
- elle est compatible avec différents modules de haut-parleurs, en particulier des modules de haut-parleurs de différentes tailles, ce qui permet de standardiser au moins en partie la production de passages internes de roue, éventuellement entre différentes gammes de véhicules, et de générer des économies de production,
- la gamme d'emboutissage des passages internes de roue peut être aisément adaptée au type de module de haut-parleur, c'est-à-dire avec réalisation de l'ouverture 40 en cas de module de haut-parleur nécessitant une ouverture vers l'extérieur, et sans réalisation d'ouverture dans le cas contraire.

L'invention est particulièrement bien adaptée à un véhicule automobile doté d'un moteur à combustion interne nécessitant de moyens de dépollution au niveau de son système d'échappement.

Elle porte aussi sur un véhicule automobile équipé d'un tel agencement de caisse.

Enfin, bien que la solution ait été décrite pour un passage de roue arrière, elle pourrait également convenir à un passage de roue avant, en particulier dans le cas d'un véhicule automobile doté d'un moteur disposé à l'arrière. En effet, un véhicule automobile dont le compartiment moteur est situé à l'arrière est davantage contraint en termes d'encombrement au niveau des passages de roues arrière et, *a fortiori*, moins contraint au niveau des passages de roues avant.

## Revendications

1. Agencement d'une caisse (1) de véhicule comportant au moins un passage (2) de roue, notamment un passage de roue arrière, réalisé par l'assemblage d'au moins une doublure latérale (3) de caisse avec une pièce interne (4), la doublure latérale (3) de caisse étant notamment une doublure de custode arrière délimitant une partie externe du passage (2) de roue, notamment un demi-passage externe de roue, la pièce interne (4) étant une pièce de liaison de la doublure latérale à un plancher, notamment un plancher de coffre, la pièce interne (4) délimitant une partie intérieure du passage (2) de roue, notamment un demi-passage interne de roue, la pièce interne (4) comprenant une ouverture (40) traversant une portion supérieure (41) de la pièce interne (4) s'étendant sensiblement en saillie verticale hors d'une portion galbée (42), l'agencement étant **caractérisé en ce que** l'ouverture (40) est destinée à créer une voie de communication entre un corps creux de la caisse communiquant vers l'extérieur du véhicule et un module de haut-parleur (7), la portion supérieure (41) de la pièce interne (4) étant transversalement espacée de la doublure latérale (3) et d'un côté de caisse (6) de sorte que l'ensemble ainsi formé par la pièce interne (4) avec la doublure latérale (3) et/ou un côté de caisse (6) délimite le corps creux ayant des propriétés acoustiques sensiblement équivalentes à celles d'un caisson de basses.

2. Agencement selon la revendication précédente, **caractérisé en ce que** la pièce interne (4) comprend une paroi supérieure (41), notamment une paroi approximativement plane s'étendant dans un plan d'axe vertical, prolongeant une paroi incurvée autour des axes longitudinal (X) et transversal (Y), la paroi incurvée délimitant le bord intérieur du passage (2) de roue.

3. Agencement selon l'une des revendications précédentes, **caractérisé en ce qu'**il comprend un module de haut-parleur (7) comportant un boîtier (71) du haut-parleur, le boîtier comportant une cloison perforée (72) s'étendant à l'arrière du haut-parleur.

4. Agencement selon la revendication précédente, **caractérisé en ce qu'**il comprend un moyen de renfort (9, 12) disposé sur la doublure latérale (3) et/ou la pièce interne (4).

5. Agencement selon la revendication précédente, **caractérisé en ce que** des moyens de support (10, 11, 13) du module de haut-parleur (7) à la caisse sont directement fixés au boîtier (71) du module de haut-parleur (7) et/ou à la doublure latérale (3) et/ou à la pièce interne (4) et/ou au moyen de renfort (9).

6. Agencement selon la revendication précédente, **caractérisé en ce que** le moyen de support (10) est un pontet de liaison fixé par vissage au moyen de renfort (9) par au moins une vis (18) traversant la doublure latérale (3).

7. Agencement selon la revendication précédente, **caractérisé en ce qu'**une autre ouverture (43) apte à assurer l'évacuation de la condensation du module de haut-parleur (7) est ménagée sur la caisse (1), notamment au niveau de la pièce interne (4) ou au niveau d'une pièce de fermeture (8) reliant la pièce interne (4) à la doublure latérale (3) et/ou au plancher.

8. Agencement selon la revendication précédente, **caractérisé en ce qu'**un tuyau (21) relie le module de haut-parleur (7) à l'autre ouverture (43).

9. Véhicule, notamment une automobile, **caractérisée en ce qu'**il comprend un agencement selon l'une quelconque des revendications précédentes.

## Patentansprüche

1. Anordnung einer Fahrzeugkarosserie (1) mit mindestens einem Raddurchlass (2), insbesondere einem Hinterraddurchlass, die durch den Zusammenbau mindestens einer seitlichen Karosserieverkleidung (3) mit einem Innenteil (4) ausgeführt ist, wobei die seitliche Karosserieverkleidung (3) insbesondere eine hintere C-Säulen-Verkleidung ist, die einen äußeren Teil des Raddurchlasses (2), insbesondere einen äußeren halben Raddurchlass, begrenzt, wobei das Innenteil (4) ein Teil zur Verbindung der seitlichen Verkleidung mit einem Boden, insbesondere einem Kofferraumboden, ist, wobei das Innenteil (4) einen inneren Teil des Raddurchlasses (2), insbesondere einen inneren halben Raddurchlass, begrenzt, wobei das Innenteil (4) eine Öffnung (40) umfasst, die einen oberen Abschnitt (41) des Innenteils (4), der sich im Wesentlichen vertikal vorstehend von einem gewölbten Abschnitt (42) erstreckt, durchquert,
wobei die Anordnung **dadurch gekennzeichnet ist, dass** die Öffnung (40) dazu vorgesehen ist, einen Verbindungsweg zwischen einem Hohlkörper der Karosserie, der mit der Außenseite des Fahrzeugs in Verbindung steht, und einem Lautsprechermodul (7) zu schaffen, wobei der obere Abschnitt (41) des Innenteils (4) in Querrichtung von der seitlichen Verkleidung (3) und einer Karosserieseite (6) beabstandet ist, so dass die durch das Innenteil (4) mit der seitlichen Verkleidung (3) und/oder einer Karosserieseite (6) gebildete Baugruppe den Hohlkörper begrenzt, der akustische Eigenschaften aufweist, die im Wesentlichen denen einer Bassbox entsprechen.

2. Anordnung nach dem vorangehenden Anspruch, **dadurch gekennzeichnet, dass** das Innenteil (4) eine obere Wand (41) umfasst, insbesondere eine annähernd ebene Wand, die sich in einer Ebene mit vertikaler Achse erstreckt und eine um die Längs- (X) und Querachse (Y) gekrümmte Wand verlängert, wobei die gekrümmte Wand den Innenrand des Raddurchlasses (2) begrenzt.

3. Anordnung nach einem der vorangehenden Ansprüche, **dadurch gekennzeichnet, dass** sie ein Lautsprechermodul (7) mit einem Lautsprechergehäuse (71) umfasst, wobei das Gehäuse eine perforierte Trennwand (72) aufweist, die sich auf der Rückseite des Lautsprechers erstreckt.

4. Anordnung nach dem vorangehenden Anspruch, **dadurch gekennzeichnet, dass** sie ein Verstärkungsmittel (9, 12) umfasst, das an der seitlichen Verkleidung (3) und/oder am Innenteil (4) angeordnet ist.

5. Anordnung nach dem vorangehenden Anspruch, **dadurch gekennzeichnet, dass** Mittel (10, 11, 13) zum Tragen des Lautsprechermoduls (7) an der Karosserie direkt am Gehäuse (71) des Lautsprechermoduls (7) und/oder an der seitlichen Verkleidung (3) und/oder am Innenteil (4) und/oder am Verstärkungsmittel (9) befestigt sind.

6. Anordnung nach dem vorangehenden Anspruch, **dadurch gekennzeichnet, dass** das Tragmittel (10) ein Verbindungssteg ist, der durch Verschrauben mit dem Verstärkungsmittel (9) mit mindestens einer Schraube (18), die die seitliche Verkleidung (3) durchdringt, befestigt ist.

7. Anordnung nach dem vorangehenden Anspruch, **dadurch gekennzeichnet, dass** eine weitere Öffnung (43), die dazu geeignet ist, den Abfluss von Kondenswasser aus dem Lautsprechermodul (7) zu gewährleisten, an der Karosserie (1) vorgesehen ist, insbesondere im Bereich des Innenteils (4) oder im Bereich eines Verschlussteils (8), das das Innenteil (4) mit der seitlichen Verkleidung (3) und/oder dem Boden verbindet.

8. Anordnung nach dem vorangehenden Anspruch, **dadurch gekennzeichnet, dass** ein Rohr (21) das Lautsprechermodul (7) mit der weiteren Öffnung (43) verbindet.

9. Fahrzeug, insbesondere Kraftfahrzeug, **dadurch gekennzeichnet, dass** es eine Anordnung nach einem der vorangehenden Ansprüche umfasst.

## Claims

1. Arrangement of a vehicle bodyshell (1) having at least one wheel arch (2), in particular a rear wheel arch, realized by the assembly of at least one bodyshell side lining (3) with an internal part (4), the bodyshell side lining (3) being in particular a rear quarter panel lining delimiting an external section of the wheel arch (2), in particular an outer wheel arch, the internal part (4) being a part for connecting the side lining to a floor, in particular a boot floor, the internal part (4) delimiting an interior section of the wheel arch (2), in particular an inner wheel arch, the internal part (4) comprising an opening (40) passing through an upper portion (41) of the internal part (4) protruding substantially vertically out of a curved portion (42), the arrangement being **characterized in that** the opening (40) is intended to create a communication route between a hollow body of the bodyshell communicating with the outside of the vehicle and a loudspeaker module (7), the upper portion (41) of the internal part (4) being spaced apart transversely from the side lining (3) and from a bodyshell side (6) such that the assembly thus formed by the internal part (4) with the side lining (3) and/or a bodyshell side (6) delimits the hollow body having acoustic properties substantially equivalent to those of a subwoofer.

2. Arrangement according to the preceding claim, **characterized in that** the internal part (4) comprises an upper wall (41), in particular an approximately planar wall extending in a plane of vertical axis, extending a wall curved about a longitudinal axis (X) and a transverse axis (Y), the curved wall delimiting the inner edge of the wheel arch (2).

3. Arrangement according to either of the preceding claims, **characterized in that** it comprises a loudspeaker module (7) having a loudspeaker housing (71), the housing having a perforated partition (72) extending at the back of the loudspeaker.

4. Arrangement according to the preceding claim, **characterized in that** it comprises a reinforcing means (9, 12) disposed on the side lining (3) and/or the internal part (4).

5. Arrangement according to the preceding claim, **characterized in that** support means (10, 11, 13) for supporting the loudspeaker module (7) on the bodyshell are directly fastened to the housing (71) of the loudspeaker module (7) and/or to the side lining (3) and/or to the internal part (4) and/or to the reinforcing means (9).

6. Arrangement according to the preceding claim, **characterized in that** the support means (10) is a connecting bridge screw-fastened to the reinforcing means (9) by at least one bolt (18) passing through the side lining (3).

7. Arrangement according to the preceding claim, **characterized in that** another opening (43) that is able to ensure the evacuation of condensation from the loudspeaker module (7) is provided in the bodyshell (1), in particular in the region of the internal part (4) or in the region of a closure part (8) connecting the internal part (4) to the side lining (3) and/or to the floor.

8. Arrangement according to the preceding claim, **characterized in that** a pipe (21) connects the loudspeaker module (7) to the other opening (43).

9. Vehicle, in particular a motor vehicle, **characterized in that** it comprises an arrangement according to any one of the preceding claims.
